# EUROPÄISCHE PATENTSCHRIFT

(11) **EP 1 150 108 B1**
(45) Veröffentlichungstag und Bekanntmachung des Hinweises auf die Patenterteilung: **29.10.2008**
(21) Anmeldenummer: 01108561.0
(22) Anmeldetag: 05.04.2001
(51) Int. Cl.: G01K 3/10

(54) **Verfahren und Vorrichtung zur Früherkennung einer möglichen Überhitzung eines Gegenstandes**
Method and apparatus for the early detection of a possible overheating of an object
Méthode et dispositif de détection précoce d'une surchauffe possible d'un objet

(30) Priorität: 26.04.2000 DE 10020380
(43) Veröffentlichungstag der Anmeldung: 31.10.2001
(73) Patentinhaber: Diehl Aerospace GmbH, 88662 Überlingen (DE)
(72) Erfinder: Messmer, Helmut, 78269 Volkertshausen (DE)
(74) Vertreter: Diehl Patentabteilung

(56) Entgegenhaltungen:
- EP-A- 0 660 282
- FR-A- 2 321 117
- GB-A- 693 642
- US-A- 4 460 893
- US-A- 5 732 546

## Beschreibung

### TECHNISCHES GEBIET

Die Erfindung betrifft ein Verfahren und eine Vorrichtung zur Früherkennung einer mö glichen Überhitzung eines Gegenstandes einer Kraftmaschine mit Treibstoffzufuhr.

Überhitzung von Gegenständen ist ein allgemeines Problem, sei es durch Hitzeentwicklung von außen (z.B. durch Feuer) oder durch interne Hitzeentwicklung, beispielsweise in Maschinen oder Bauteilen.

Beispielsweise beim Betrieb von Kraftmaschinen, z.B. Verbrennungsmotoren und Triebwerken, die mit leicht brennbaren Flüssigkeiten oder Gasen betrieben werden, besteht die potenzielle Gefahr eines Brandes im Fehlerfall. Besonders im Bereich der Luftfahrt ist es wichtig, im Falle eines Brandes durch rechtzeitiges Unterbrechen der Zufuhr von Treibstoff bzw. Gas das Feuer unter Kontrolle zu bringen und damit auch die Zerstörung der Kraftmaschine zu verhindern. Dabei kann das Unterbrechen der Kraftstoffzufuhr sowohl per Hand mittels eines Kraftstoffhahns oder per elektromechanischem Ventil erfolgen.

Verschiedene Verfahren bzw. Maßnahmen sind bekannt, welche eine mö gliche Überhitzung eines Gegenstandes berücksichtigen. Zum einen kann der Gegenstand vor Überhitzung geschützt werden (d.h. die Überhitzung wird verhindert), beispielsweise durch eine feuerfeste Verkleidung oder durch Kühlung. Zum anderen kann das Verfahren bzw. die Maßnahme darin bestehen, die mögliche Überhitzung zu erkennen und dann geeignete Maßnahmen zu treffen, welche dann entweder die Überhitzung verhindern oder die aufgrund der Überhitzung auftretenden Gefahren eliminieren oder reduzieren. Eine solche Maßnahme ist z.B. das Unterbrechen der Treibstoffzufuhr einer Kraftmaschine im Fall eines Brandes oder die Unterbrechung der Stromversorgung eines Bauteils.

Um eine Überhitzung wirksam zu berücksichtigen, ist es günstig, wenn die Gefahr der Überhitzung rechtzeitig erkannt wird.

So offenbart z.B. die GB-A-693,642 eine Vorrichtung zum Feststellen von Temperaturveränderungen in einer Gasturbine. Die Vorrichtung enthält zu diesem Zweck zwei benachbarte Stäbe mit unterschiedlichen Wärmekapazitäten, die sich in dem heißen Gasstrom befinden, sodass sie von dem Gasstrom erhitzt werden. Bei einer Temperaturveränderung des Gasstroms sind die erzeugten Längenänderungen der beiden Stäbe unterschiedlich, wodurch ein Schalter betätigt wird, wodurch wiederum ein Warnsignal ausgelöst und/oder Schutzmaßnahmen getroffen werden können.

Weiter ist aus der US-A-5,732,546 ein Verfahren zur Begrenzung von Stoßtemperaturen in einer Gasturbine bekannt. Da die Stoßtemperatur mit der Beschleunigungsrate des Rotors und dem Eingangsdruck der Druckluft in Zusammenhang steht, wird die Treibstoffzufuhr in Abhängigkeit von diesen Parametern gesteuert.

In Zusammenhang mit der Früherkennung einer mö glichen Überhitzung von Gegenständen beschreibt die FR-A-2,321,117 eine Wärme-Detektoreinrichtung, die automatisch ein Alarmsignal erzeugt, wenn die überwachte Temperatur zu schnell zunimmt, d.h. der Temperaturgradient zu groß wird.

### ZUSAMMENFASSUNG DER ERFINDUNG

Der Erfindung liegt die Aufgabe zugrunde, ein effektives Verfahren und eine effektive Vorrichtung zur Früherkennung einer mö glichen Überhitzung eines Gegenstandes einer Kraftmaschine mit Treibstoffzufuhr zu schaffen.

Erfindungsgemäß wird diese Aufgabe durch ein Verfahren mit den in Anspruch 1 aufgeführten Merkmalen und durch eine Vorrichtung mit den in Anspruch 5 aufgeführten Merkmalen gelöst.

Die Erfindung beruht auf der Erkenntnis, dass eine mö gliche Überhitzung eines Gegenstandes durch die Ermittlung des Temperaturgradienten sehr früh erkennbar ist, nämlich vor dem tatsächlichen Auftreten der Überhitzung. Dies wird ausgenutzt, indem der gemessene Temperaturgradient mit einem für den Gegenstand individuell festgelegten Schwellenwert verglichen wird. Wenn dieser Schwellenwert überschritten wird, kann davon ausgegangen werden, dass eine Gefahr der Überhitzung des Gegenstandes besteht. Durch Feststellen dieses Überschreitens kann dann als geeignete Schutzmaßnahme die Treibstoffzufuhr der Kraftmaschine unterbrochen werden.

Das Verfahren und die Vorrichtung nach der Erfindung können beispielsweise zur Früherkennung von Feuer und/oder zum Überhitzungsschutz eines Bauteils der Kraftmaschine eingesetzt werden.

### KURZBESCHREIBUNG DER ZEICHNUNGEN

Ein Ausführungsbeispiel der Erfindung ist nachstehend unter Bezugnahme auf die zugehörigen Zeichnungen näher erläutert. Darin zeigen:
- Fig. 1: eine Blockdarstellung einer Vorrichtung zur Früherkennung einer mö glichen Überhitzung eines Gegenstandes;
- Fig. 2: eine schematische Darstellung eines in einem Gehäuse untergebrachten, elektronischen Bauteils sowie daran angebrachter Temperatursensoren;
- Fig. 3: ein Diagramm des mittels der in Fig. 2 dargestellten Temperatursensoren gemessenen, zeitlichen Temperaturverlaufs bei Feuereinwirkung auf das Bauteil von Fig. 2; und
- Fig. 4: ein Diagramm des aus dem in Fig. 3 dargestellten Temperaturverlauf mittels der in Fig. 1 dargestellten Vorrichtung ermittelten, zeitlichen Temperaturgradientenverlaufs.

### DETAILLIERTE BESCHREIBUNG EINES BEVORZUGTEN AUSFÜHRUNGSBEISPIELS

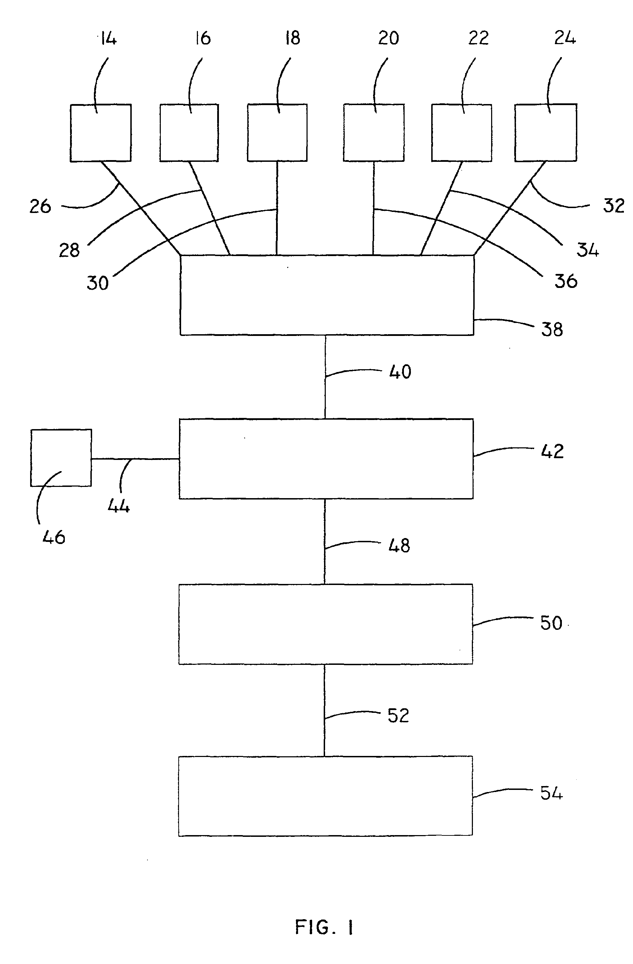

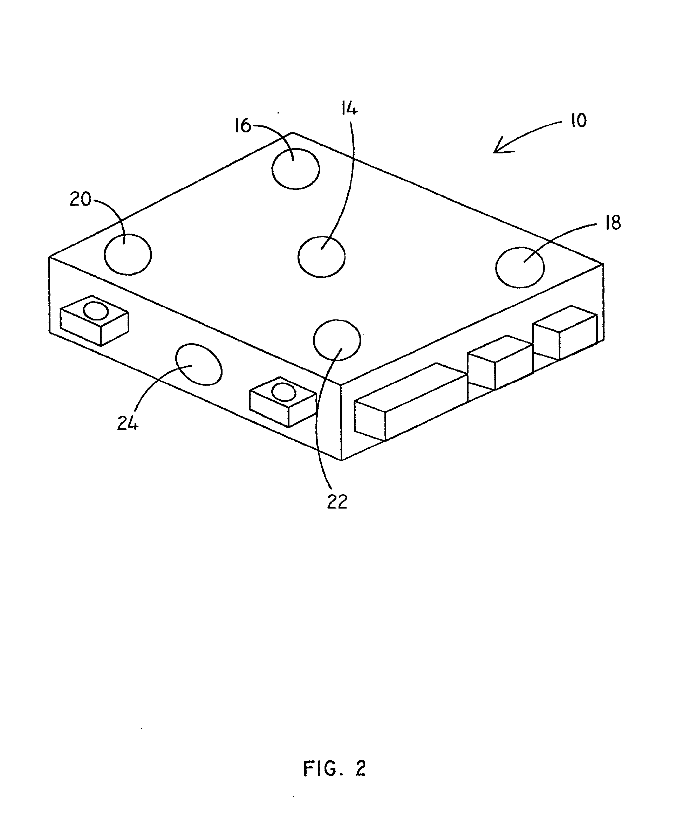

In Fig. 1 ist eine Vorrichtung zur Früherkennung einer (z.B. durch Feuer oder durch eigene Wärmeentwicklung drohenden) Überhitzung eines in Fig. 2 dargestellten Bauteils 10 einer Kraftmaschine mit Treibstoffzufuhr in Blockdarstellung gezeigt. An dem Gehäuse 12 des Bauteils 10 ist ein erster Temperatursensor 14 vorgesehen. An dem Gehäuse 12 können jedoch auch weitere Temperatursensoren 16, 18, 20, 22 und 24 vorgesehen sein.

Die Temperatursensoren 14, 16, 18, 20, 22 und 24 sind über Leitungen 26, 28, 30, 32, 34 bzw. 36 mit einer Signalverarbeitungsanordnung 38 zum ermitteln des Temperaturgradienten aus den mittels eines oder mehrerer der Temperatursensoren 14, 16, 18, 20, 22 und 24 gemessenen Temperaturwerten verbunden. Die Signalverarbeitungsanordnung 38 ist über eine Leitung 40 mit einem Komparator 42 verbunden. Der Komparator 42 ist über eine Leitung 44 mit einem Schwellenwertgeber 46 und über eine Leitung 48 mit einem Warnsignalgeber 50 verbunden. Der Warnsignalgeber 50 ist weiter über eine Leitung 52 mit einer Maßnahme-Anordnung 54 z.B. in Form eines Schalters zum Unterbrechen der Treibstoffzufuhr der Kraftmaschine verbunden.

### Die dargestellte Vorrichtung arbeitet wie folgt:

Durch einen oder mehrere der Temperatursensoren 14, 16, 18, 20, 22 und 24 wird die Temperatur des Bauteils 10 gemessen. Über die Leitungen 26, 28, 30, 32, 34 bzw. 36 wird die Signalverarbeitungsanordnung 38 von den gemessenen Temperaturwerten beaufschlagt. Aus den gemessenen Temperaturwerten wird in der Signalverarbeitungsanordnung 38 der zeitliche Temperaturgradient ermittelt. Dieser ermittelte Wert wird über die Leitung 40 auf den Komparator 42 aufgeschaltet. Weiter erhält der Komparator 42 über die Leitung 44 einen durch den Schwellenwertgeber 46 festgelegten Schwellenwert. Der Komparator 42 vergleicht den ermittelten Wert des Temperaturgradienten mit dem Schwellenwert und liefert ein Komparatorsignal über die Leitung 48 an den Warnsignalgeber 50. Wenn der ermittelte Wert des Temperaturgradienten größer als der Schwellenwert ist, löst das Komparatorsignal in dem Warnsignalgeber 50 ein Warnsignal aus. Dieses Warnsignal kann z.B. ein akustisches oder optisches Signal sein, durch welches eine Person darauf aufmerksam gemacht wird, dass eine drohende Überhitzung des Bauteils vorliegt. Das Warnsignal wird jedoch auch über die Leitung 52 auf die Maßnahme-Anordnung 54 aufgeschaltet, welche dann die entsprechende Maßnahme realisiert.

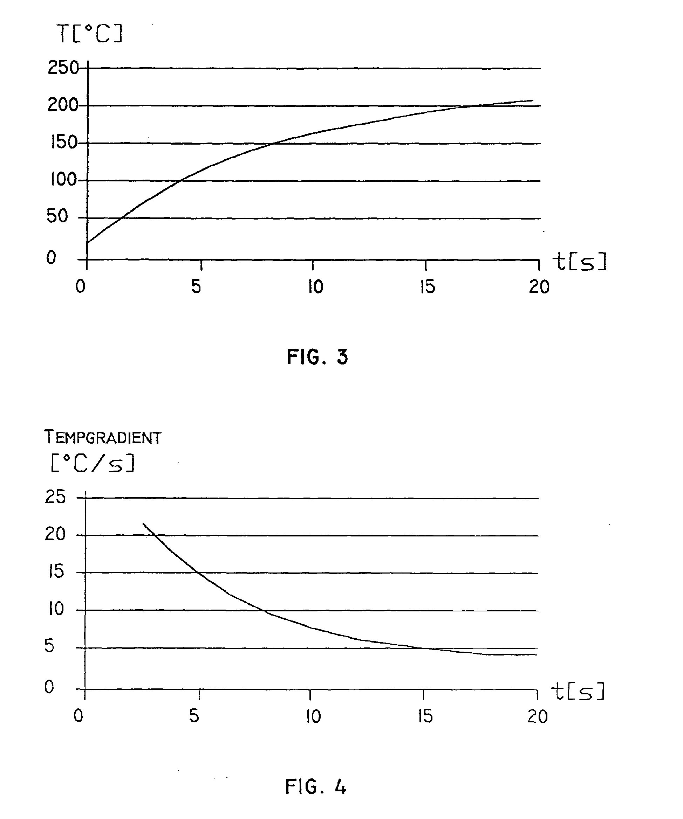

In Fig. 3 ist die bei einem Versuch mittels der Temperatursensoren 14, 16, 18, 20, 22 und 24 bei Feuereinwirkung auf das Bauteil 10 gemessene Temperatur über der Zeit aufgetragen. Man erkennt, dass die Temperaturerhö - hung pro Zeiteinheit anfänglich sehr groß ist und dann stetig abnimmt. Dieses Verhalten ist in dem in Fig. 4 dargestellten Diagramm noch deutlicher erkennbar, in welchem der Temperaturgradient über der Zeit aufgetragen ist. Anfänglich erreicht der Temperaturgradient Werte von 15 - 20°C/s und geht dann gegen Null.

In der Kenntnis, dass der Temperaturgradient bei einer zulässigen "normalen" Erwärmung eines Bauteils etwa 0,2°C beträgt, wird die Effektivität dieses Verfahrens sehr deutlich. Der Schwellenwert kann dann im Bereich zwischen 0,2°C/s und etwa 15°C/s gewählt werden.

## Patentansprüche

1. Verfahren zur Früherkennung einer mö glichen Überhitzung eines Gegenstandes (10) einer Kraftmaschine mit Treibstoffzufuhr, mit den Verfahrensschritten:
(a) Messen der Temperatur des Gegenstandes (10) an wenigstens einer Messposition;
(b) Ermitteln des zeitlichen Temperaturgradienten aus den nacheinander gemessenen Temperaturwerten an der wenigstens einen Messposition;
(c) Vergleichen des ermittelten Wertes des Temperaturgradienten mit einem vorbestimmten Wert;
(d) Auslö sen eines Warnsignals in Abhängigkeit von dem Vergleich des ermittelten Wertes des Temperaturgradienten mit dem vorbestimmten Wert; und
(e) Unterbrechen der Treibstoffzufuhr als Schutzmaßnahme in Abhängigkeit von dem ausgelö sten Warnsignal.

2. Verfahren nach Anspruch 1 zur Früherkennung von Feuer.

3. Verfahren nach Anspruch 1 oder 2 zum Überhitzungsschutz von Bauteilen der Kraftmaschine.

4. Verfahren nach einem der Ansprüche 1 bis 3, bei welchem der vorbestimmte Wert im Bereich zwischen 0,2°C/s und etwa 15°C/s gewählt ist.

5. Vorrichtung zur Früherkennung einer mö glichen Überhitzung eines Gegenstandes (10) einer Kraftmaschine mit Treibstoffzufuhr, enthaltend
(a) mindestens einen Temperatursensor (14, 16, 18, 20, 22, 24) zur Messung der Temperatur des Gegenstandes (10);
(b) Signalverarbeitungsmittel (30) zum Ermitteln des zeitlichen Temperaturgradienten aus den mittels des mindestens einen Temperatursensors (14, 16, 18, 20, 22, 24) nacheinander gemessenen Temperaturwerten;
(c) Komparatormittel (42) zum Vergleichen des ermittelten Wertes des Temperaturgradienten mit einem vorbestimmten Wert und zum Ausgeben eines Komparatorsignals;
(d) Warnsignalmittel (50) zum Auslö sen eines Warnsignals in Abhängigkeit von dem Komparatorsignal; und
(e) Schutzmaßnahme-Mittel (54), welche durch das Warnsignal aktivierbar sind, zum Unterbrechen der Treibstoffzufuhr.

## Claims

1. Method for early identification of possible overheating of an object (10) of an internal combustion engine with a fuel supply, comprising the following method steps:
(a) measurement of the temperature of the object (10) at at least one measurement position,
(b) determination of the rate of change of the temperature over time from the successively measured temperature values at the at least one measurement position;
(c) comparison of the determined value of the rate of change of the temperature with a predetermined value;
(d) initiation of a warning signal as a function of the comparison of the determined value of the rate of change of the temperature with the predetermined value; and
(e) interruption of the fuel supply as a protective measure as a function of the initiated warning signal.

2. Method according to Claim 1 for early identification of fire.

3. Method according to Claim 1 or 2 for overheating protection of components of the internal combustion engine.

4. Method according to one of Claims 1 to 3, in which the predetermined value is chosen in the range between 0.2°C/s and about 15°C/s.

5. Apparatus for early identification of possible overheating of an object (10) in an internal combustion engine with a fuel supply, containing
(a) at least one temperature sensor (14, 16, 18, 20, 22, 24) for measurement of the temperature of the object (10);
(b) signal processing means (30) for determination of the rate of change of the temperature from the temperature values measured successively by means of the at least one temperature sensor (14, 16, 18, 20, 22, 24);
(c) comparator means (42) for comparison of the determined value of the rate of change of the temperature with a predetermined value and for emission of a comparator signal;
(d) warning signal means (50) for initiation of a warning signal as a function of the comparator signal; and
(e) protective measure means (54), which can be activated by the warning signal in order to interrupt the fuel supply.

## Revendications

1. Procédé de détection anticipée d'un risque de surchauffe d'un objet (10) d'une machine motrice avec arrivée de combustible, comprenant les étapes suivantes :
(a) mesure de la température de l'objet (10) sur au moins un point de mesure ;
(b) détermination du gradient de température dans le temps à partir des valeurs de la température mesurées l'une après l'autre sur l'au moins un point de mesure ;
(c) comparaison de la valeur déterminée du gradient de température avec une valeur prédéterminée ;
(d) déclenchement d'un signal d'alerte en fonction de la comparaison de la valeur déterminée du gradient de température avec la valeur prédéterminée ; et
(e) interruption de l'arrivée de combustible en tant que mesure protectrice en fonction du signal d'alerte déclenché.

2. Procédé selon la revendication 1 pour la détection anticipée d'un incendie.

3. Procédé selon la revendication 1 ou 2 pour la protection contre la surchauffe des composants de la machine motrice.

4. Procédé selon l'une des revendications 1 à 3, avec lequel la valeur prédéterminée est choisie dans la plage entre 0,2 °C/s et environ 15 °C/s.

5. Dispositif de détection anticipée d'un risque de surchauffe d'un objet (10) d'une machine motrice avec arrivée de combustible, comprenant :
(a) au moins un détecteur de température (14, 16, 18, 20, 22, 24) pour mesurer la température de l'objet (10) ;
(b) des moyens de traitement du signal (30) pour déterminer le gradient de température dans le temps à partir des valeurs de la température mesurées l'une après l'autre au moyen de l'au moins un détecteur de température (14, 16, 18, 20, 22, 24) ;
(c) des moyens de comparaison (42) pour comparer la valeur déterminée du gradient de température avec une valeur prédéterminée et pour délivrer un signal de comparateur ;
(d) des moyens de signal d'alerte (50) pour déclencher un signal d'alerte en fonction du signal de comparateur ; et
(e) des moyens de mesure de protection (54) qui peuvent être activés par le signal d'alerte pour interrompre l'arrivée de combustible.
